# EUROPEAN PATENT APPLICATION

(11) **EP 2 963 855 A1**
(43) Date of publication of application: **06.01.2016**
(21) Application number: 14306102.6
(22) Date of filing: 04.07.2014
(51) Int. Cl.: H04L 9/08

(54) **Synchronization method for synchronizing a peripheral function.**

(71) Applicant: Gemalto SA, 92190 Meudon (FR)
(72) Inventor: Antoine, Matthieu, 92190 Meudon (FR); Spyropoulos, Evangelos, 92190 Meudon (FR)
(74) Representative: Cour, Pierre

(57) **Abstract**

The present invention relates to a synchronization method (MTH) for synchronizing a peripheral function (PF) of a portable device (D), said peripheral function (PF) using first data (DAT1), said portable device (D) comprising a component (MC) adapted to perform said peripheral function (PF) and a secure element (SE) adapted to perform a main function (MF). Said synchronization method (MTH) comprises a synchronization of said first data (DAT1) with reference data (DAT2) via a communication link (LNK1) established for said main function (MF) between said portable device (D) and a remote server (SERV1), said synchronization comprising:
- the transmission by said secure element (SE) of a first message (Msg1) to said remote server (SERV1) via said communication link (LNK1);
- the reception by said secure element (SE) of a second message (Msg2) from said remote server (SERV1) via said communication link (LNK1);
- the checking by said secure element (SE) if said first data (DAT1) are shifted with respect to said reference data (DAT2) according to said second message (Msg2).

## Description

### FIELD OF THE INVENTION

The present invention relates to a synchronization method for synchronizing a peripheral function of a portable device, said peripheral function using first data, said portable device comprising a component adapted to perform said peripheral function and a secure element adapted to perform a main function.

It also relates to a corresponding synchronization system.

Such a synchronization method may be used in any application where a peripheral function needs synchronization.

### BACKGROUND OF THE INVENTION

A known peripheral function which uses first data such as an internal clock's time is for example a one-time password generator. This one time password generator needs to be synchronized with a server which verifies said one time password. Therefore, said internal clock's time has to be accurate enough all through the lifetime of said portable device. The internal clock which provides the internal clock's time is based on some crystal which works at a specific frequency.

One problem of this well-known prior art is that an internal clock which gives the exact time is expensive and is difficult to produce because the crystal of said internal clock depends of some parameters such as the temperature and mechanical constraints applied on the portable device (such as the folding of said portable device). The internal clock's time which depends of the crystal's frequency may therefore generate a drift because of the parameters which alter during the lifetime of said portable device. The peripheral function may therefore be useless because of a drift which is too high.

It is an object of the invention to provide a synchronization method for synchronizing a peripheral function, which resolves the problem above-stated.

### SUMMARY OF THE INVENTION

To this end, there is provided a synchronization method for synchronizing a peripheral function of a portable device, said peripheral function using first data, said portable device comprising a component adapted to perform said peripheral function and a secure element adapted to perform a main function, wherein said synchronization method comprises a synchronization of said first data with reference data via a communication link established for said main function between said portable device and a remote server, said synchronization comprising:
- the transmission by said secure element of a first message to said remote server via said communication link;
- the reception by said secure element of a second message from said remote server via said communication link;
- the checking by said secure element if said first data are shifted with respect to said reference data according to said second message.

Hence, a simple method to synchronize the peripheral function with a remote server is used. This way is also less expensive because it uses a communication link which already exists between the portable device and the remote server for performing the main function. There is no need to implement a dedicated communication link for said synchronization.

According to non-limitative embodiments of the invention, the synchronization method in accordance with the invention further comprises the following characteristics.

In a first non-limitative embodiment, the first message comprises said first data and the second message comprises synchronization data if said first data are shifted with respect to said reference data, and the synchronization further comprises the comparison of said first data with said reference data by said remote server.

In a second non-limitative embodiment, the first message comprises a request for the reference data and the second message comprises said reference data, and the checking comprises the comparison of said first data with said reference data by said secure element

In a non-limitative embodiment, the synchronization further comprises:
- the request by said secure element for the first data from said component when said communication link is established and the reception of said first data;
- if said first data are shifted with respect to said reference data, the transmission by said secure element of synchronization data to said component.

In a non-limitative embodiment, the synchronization further comprises:
- the transmission by said component of the first data to said secure element upon request of said secure element;
- if said first data are shifted with respect to said reference data, the reception by said component of synchronization data from said secure element and the update of said first data according to said synchronization data.

In a non-limitative embodiment, the transmission/reception of said synchronization data is performed if said first data are shifted by a predetermined offset value with respect to said reference data.

In a first non-limitative embodiment, said first data are an internal clock's time and said reference data are a reference clock's time.

In a second non-limitative embodiment, said first data are a pseudorandom generator's value and said reference data are a reference pseudorandom generator's value.

In addition, there is provided a synchronization system comprising:
- a remote server; and
- a portable device comprising a component adapted to perform a peripheral function which uses first data and a secure element adapted to perform a main function, wherein said portable device is adapted to perform a synchronization of said first data with reference data via a communication link established between said portable device and said remote server for said main function, said secure element being adapted to perform a synchronization function comprising:
- the transmission of a first message to said remote server via said communication link;
- the reception of a second message from said remote server via said communication link;
- the checking if said first data are shifted with respect to said reference data according to said second message.

The synchronization system further comprises the following characteristics.

In a non-limitative embodiment, said portable device is a smart card.

In a non-limitative embodiment, said component is the secure element.

In a non-limitative embodiment, said synchronization function further comprises:
- the request for the first data from said component when said communication link is established and the reception of said first data;
- if said first data are shifted with respect to said reference data, the transmission of synchronization data to said component.

In a non-limitative embodiment, said component of said portable device is adapted to perform said peripheral function comprising:
- the transmission of the first data to said secure element upon request of said secure element;
- if said first data are shifted with respect to said reference data, the reception of synchronization data from said secure element and the update of said first data according to said synchronization data.

In a non-limitative embodiment, said remote server is adapted to:
- receive said first message from said secure element via said communication link;
- transmit said second message to said secure element via said communication link.

In addition, there is provided a portable device comprising a component adapted to perform a peripheral function which uses first data and a secure element adapted to perform a main function, wherein said portable device is adapted to perform a synchronization of said first data with reference data via a communication link established for said main function between said portable device and said remote server, said secure element being adapted to perform a synchronization function comprising:
- the transmission of a first message to said remote server via said communication link;
- the reception of a second message from said remote server via said communication link;
- the checking if said first data are shifted with respect to said reference data according to said second message.

### BRIEF DESCRIPTION OF THE DRAWINGS

Some embodiments of methods and/or apparatus in accordance with embodiments of the present invention are now described, by way of example only, and with reference to the accompanying drawings, in which:
- Fig. 1 illustrates schematically a synchronization system which is adapted to carry out the synchronization method according to a first non-limitative embodiment of the invention, said synchronization system comprising a portable device, a remote server and a terminal;
- Fig. 2 illustrates schematically synchronization system which is adapted to carry out the synchronization method according to a second non-limitative embodiment of the invention ;
- Fig. 3 illustrates schematically the portable device of Fig. 1 or Fig. 2 and the different functions which are implemented by said portable device according to a first non-limitative embodiment;
- Fig. 4 illustrates schematically the remote server of Fig. 1 or Fig. 2 and the different functions which are implemented by said remote server according to a first non-limitative embodiment;
- Fig. 5 illustrates schematically the portable device of Fig. 1 or Fig. 2 and the different functions which are implemented by said portable device according to a second non-limitative embodiment;
- Fig. 6 illustrates schematically the remote server of Fig. 1 or Fig. 2 and the different functions which are implemented by said remote server according to a second non-limitative embodiment;
- Fig. 7 illustrates a schematic organization chart of the synchronization method carried out by the synchronization system of Fig. 1 or Fig. 2 according to a first non-limitative embodiment of the invention ;
- Fig. 8 is a sequence diagram which illustrates the different steps of the synchronization method of Fig. 7 ;
- Fig. 9 illustrates a schematic organization chart of the synchronization method carried out by the synchronization system of Fig. 1 or Fig. 2 according to a second non-limitative embodiment of the invention ; and
- Fig. 10 is a sequence diagram which illustrates the different steps of the synchronization method of Fig. 9.

### DESCRIPTION OF EMBODIMENTS OF THE INVENTION

In the following description, well-known functions or constructions by the man skilled in the art are not described in detail since they would obscure the invention in unnecessary detail.

In the following description, the phrase time T2 or reference time T2 will be used indifferently to describe a reference clock's time T2, and the phrase time T1 or internal time T1 will be used indifferently to describe an internal clock's time T1.

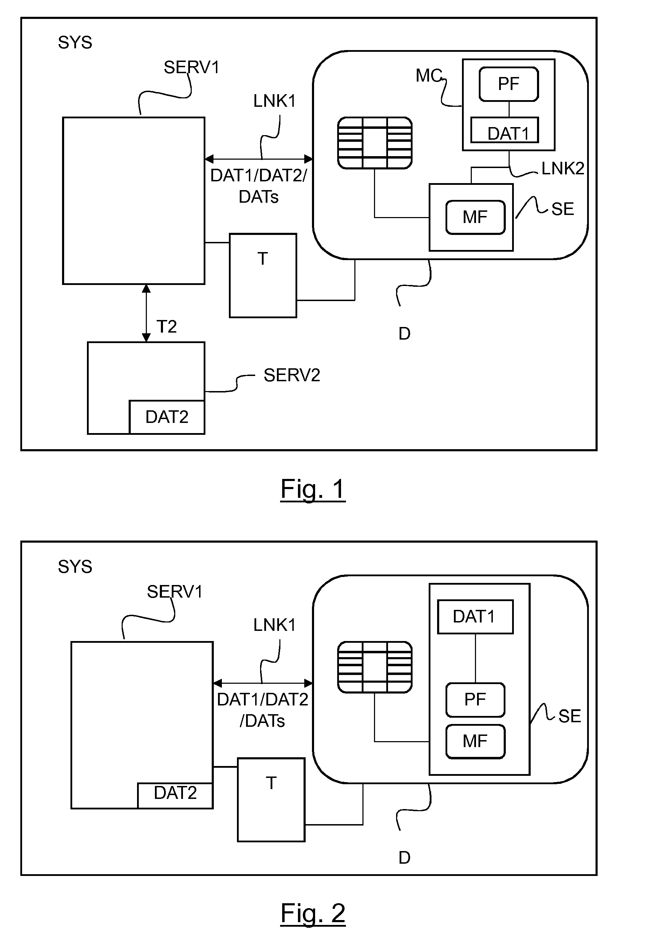

The synchronization system SYS which is adapted to carry out the synchronization method MTH according to the invention, is illustrated in Fig. 1 and Fig. 2.

It comprises:
- a remote server SERV1 ; and
- a portable device D which is adapted to perform a main function MF and a peripheral function PF which uses first data DAT1, said portable device D and said remote server SERV1 being adapted to communicate with each other via a communication link LNK1 established in order to execute said main function MF.

The synchronization system SYS further comprises a terminal T with which the portable device D is adapted to cooperate to establish the communication link LNK1 with said remote server SERV1. As the terminal T is only used as a mean to connect the portable device D to the remote server SERV1 in order to establish the communication link LNK1, it won't be further described in details.

The different elements of said synchronization system SYS are described in detail in the following.

The portable device D comprises :
- a secure element SE for performing said main function MF ;
- a component MC for performing said peripheral function PF.

The portable device D is adapted to perform a synchronization of the first data DAT1 with the reference data DAT2 via a communication link LNK1 established for said main function MF between said portable device D and said remote server SERV1.

In a first non-limitative embodiment as illustrated in Fig. 1, the peripheral function PF is performed by a component MC different from said secure element SE, said component MC being in a non-limitative example a microcontroller which is connected to said secure element SE. In this case said component MC and said secure element SE are adapted to communicate with each other via a communication link LNK2 such as an UART ("Universal Asynchronous Receiver Transmitter") or a SPI ("Serial Peripheral Interface") interface.

In this first embodiment, the synchronization system SYS further comprises:
- a synchronization server SERV2 different from the remote server SERV1, said synchronization server SERV2 comprising reference data DAT2.

In a second non-limitative embodiment as illustrated in Fig. 2, the peripheral function PF is performed by said secure element SE. The component MC is therefore the secure element SE.

In this second embodiment, the remote server SERV1 comprises the reference data DAT2.

It is to be noted that the secure element SE comprises a secured embedded chip for performing secured operations and may be integrated in various form factors: SIM Card, or SD Card, M2M form factor or embedded in larger circuit.

In a non-limitative example, the portable device D is a smart card SM.

In a non-limitative example, the remote server SERV1 is a payment server, and the main function MF is a payment transaction with a connection of the portable device D to the remote server SERV1 by means of a terminal T.

In a non-limitative example, the component MC is a one-time-password generator (OTPG) which is different from the secure element SE and the peripheral function PF is a one-time-password OTP generation.

These non-limitative examples will be used in the following.

In order to initiate an online purchase on an internet website for example, a user of the smart card D, which is in this example a banking card, has to enter his smart card number and the CVV ("Card Verification Value") printed on the back of the smart card. It is to be noted that for the online payment, there is no need for the smart card D to be connected to a remote server. The smart card doesn't cooperate with any terminal.

To secure the online payment, usually, the website connects to a remote server, which may be the payment remote server SERV1 or another server, and said remote server asks for a one-time password OTP.

The user will use the one-time password generator OTPG of his smart card D to create a one-time password OTP, said one-time password OTP being displayed on a LCD display embedded in the smart card D for example.

The one-time password OTP is sent to said remote server and is authenticated by said remote server. If said one-time password OTP is valid, the payment transaction is finalized.

The generation of the one-time password OTP, which is the peripheral function PF, is based on synchronization between the remote server to which the website connects and the OTP generator OTPG. If the OTP generated is too shifted in comparison with a reference OTP of the remote server, it won't be recognized and the online payment will be rejected. The referenced OTP is based on a reference data DAT2 to which the remote server has access.

The synchronization system SYS avoids such cause of OTP denial as will be described hereinafter.

It is to be noted that the OTP generator OTPG which performs the peripheral function PF has no communication interface to access to the remote server SERV1. Therefore, as described hereinafter, the OTP generator OTPG uses the secure element SE of the smart card D as an access channel to the external world, and in particular to the remote server SERV1 (or to the synchronization server SERV2 described hereinafter). It will benefit from the smart card D connectivity with the remote server SERV1 (which is held for the payment transaction MF) to collect synchronization data DATs representative of reference data DAT2 to be synchronized with.

In this example of the peripheral function PF which is an OTP one-time-password OTP generation, in order to synchronize the OTP, either one uses a reference clock's time T2 as the reference data DAT2 to be synchronized with, either one uses a pseudorandom generator's value as reference data DAT2 to be synchronized with. In the first case, the synchronization will be a time synchronization of the OTP between an internal clock's time T1 used by the peripheral function PF and the reference clock's time T2. In the second case, the synchronization will be a synchronization of a value. The synchronization will be performed if there is a shift (also called difference) between the first data DAT1 and the reference data DAT2.

The synchronization system SYS is adapted to perform synchronization according to a first non-limitative embodiment, and to a second non-limitative embodiment. The different elements of the synchronization system SYS are described hereinafter for both embodiments and with the non-limitative example of the first data DAT1 being an internal clock's time T1 and the reference data DAT2 being a reference clock's time T2.

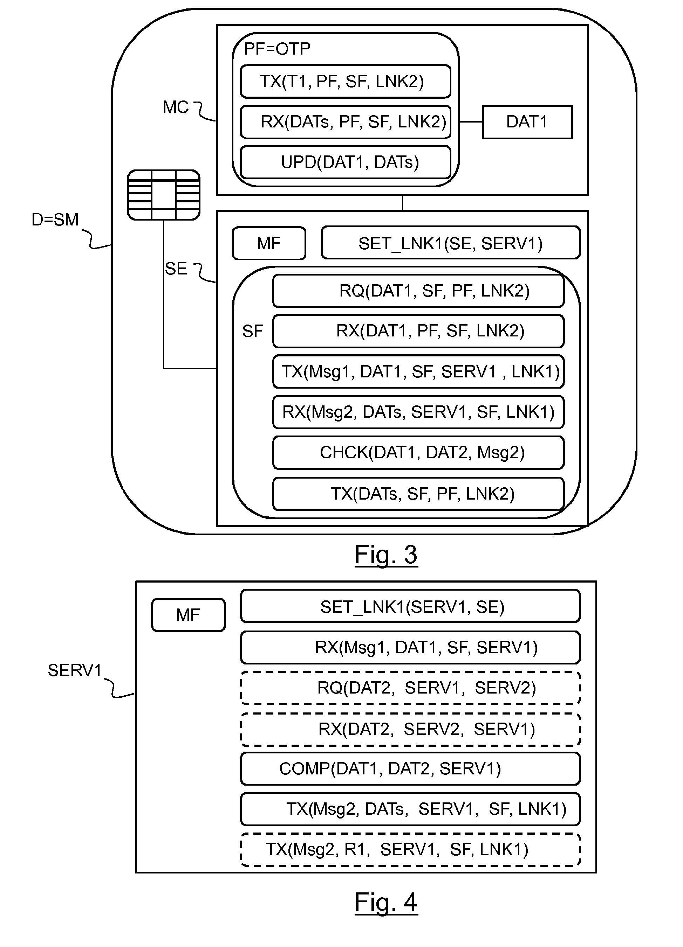

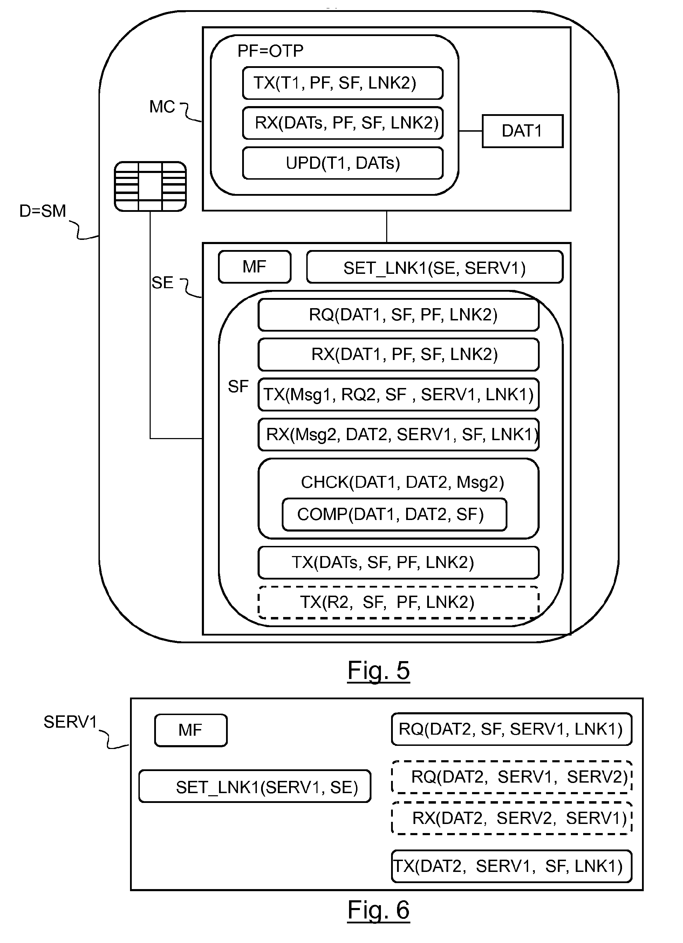

According to both non-limitative embodiments illustrated in Fig. 3-Fig. 4 (for the first embodiment) and in Fig. 5-Fig. 6 (for the second embodiment), the secure element SE of the portable device D is adapted to:
- establish the communication link LNK1 for said main function MF with said remote server SERV 1 (illustrated SET_LNK1(SE, SERV1));
- perform the main function MF, the payment transaction in the given example, when said communication link LNK1 is established. The main transaction MF is performed (and therefore the communication link LNK1 is established) when said portable device D is cooperates with said terminal T.

### First embodiment.

As described hereinafter, according to said first non-limitative embodiment illustrated in Fig. 3 and in Fig. 4, the remote server SERV1 will perform a comparison between the internal time T1 and the reference time T2 to check if there is a shift (also called drift) between both times.

According to said first embodiment, the secure element SE (illustrated in Fig. 3) is adapted to perform a synchronization function SF comprising:
- the transmission of a first message Msg1 to said remote server SERV1 via said communication link LNK1 (illustrated TX(Msg1, DAT1, SF, SERV1, LNK1));
- the reception of a second message Msg2 from said remote server SERV1 via said communication link LNK1 (illustrated RX(Msg2, DATs, SERV1, SF, LNK1));
- the checking if said internal clock's time T1 is shifted with respect to said reference clock's time T2 according to said second message Msg2 (illustrated CHCK(DAT1, DAT2, Msg2)).

In this first embodiment, the first message Msg1 comprises said internal clock's time T1 and the second message Msg2 comprises synchronization data DATs if said internal clock's time T1 is shifted with respect to said reference clock's time T2. In this case, the checking consists in verifying that the second message Msg2 comprises synchronization data DATs and not a first flag R1. Said first flag R1 will be described later in the following. In verifying the content of said second message Msg2, the synchronization function SF verifies if there is a shift between the internal time T1 and the reference time T2, as the presence of synchronization data DATs acknowledges the existence of a shift. According to said checking, transmission of synchronization data DATs, and therefore synchronization will be performed or not as described hereinafter.

The synchronization function SF further comprises:
- the request for the internal clock's time T1 from said component MC (which is the OTP generator OTPG in the given example) when said communication link LNK1 is established (illustrated RQ(DAT1, SF, PF, LNK2)) and its reception (illustrated RX(DAT1, PF, SF, LNK2)) ;
- if said internal clock's time T1 is shifted with respect to said reference clock's time T2, the transmission of said synchronization data DATs to said component MC (illustrated TX(DATs, SF, PF, LNK2)).

The synchronization function SF used the communication link LNK2 for said request and said transmission.

In a first non-limitative embodiment, the synchronization data DATs are the reference time T2 itself.

In a second none- limitative embodiment, the synchronization data DATs are the offset value Δt corresponding to the shift S between said times T1 and T2.

The component MC (the OTP generator OTPG in the given example) illustrated in Fig. 3 is adapted to perform said peripheral function PF (OTP generation) comprising:
- the transmission of the internal clock's time T1 to said secure element SE upon request of said secure element SE (illustrated TX(DAT1, PF, SF, LNK2)) ;
- if said internal clock's time T1 is shifted with respect to said reference clock's time T2, the reception of synchronization data DATs from said secure element SE (illustrated RX(DATs, PF, SF, LNK2)) and the update of said internal clock's time T1 according to said synchronization data DATs (illustrated UPD(DAT1, DATs)).

The peripheral function PF used the communication link LNK2 for said transmission and said reception.

In a first non-limitative embodiment, each time there is a shift between the two times T1, T2, the synchronization data DATs are transmitted and the update of time T1 is performed.

In a second non-limitative embodiment, only if the shift S between the two times T1, T2 is higher than a predetermined offset value Voff, the secure element SE sends the synchronization data DATs to the component MC and the latter updates its time T1. Otherwise, there is no transmission of synchronization data DATs and no update of the time T1. Hence, the time synchronization is not performed each time there is a shift between the internal clock's time T1 and the reference clock's time T2, but only when necessary. It avoids updating said internal clock's time T1 when it is not necessary (when the shift is too small to affect the recognition of the OTP by the payment remote server SERV1 in the given example).

It is to be noted that these two non-limitative embodiments applied on the shift S may be applied on the second non-limitative embodiment of the synchronization system SYS further described in the following (Fig. 5 and Fig. 6).

In order to perform the synchronization according to the first non-limitative embodiment, the remote server SERV1 (the payment server in the given example) illustrated in Fig. 4 is adapted to:
- establish the communication link LNK1 with said secure element SE (illustrated SET_LINK1(SERV1, SE));
- receive said first message Msg1 from said secure element SE (illustrated RX(Msg1, DAT1, SF, SERV1, LNK1)) via said communication link LNK1, said first message comprising said internal clock's time T1 in this case ;
- compare said internal clock's time T1 with said reference clock's time T2 (illustrated COMP(DAT1, DAT2, SERV1)) ; and
- transmit said second message Msg2 to said secure element SE via said communication link LINK1.

If said internal clock's time T1 is shifted with respect to said reference clock's time T2, said message Msg2 comprises said synchronization data DATs (illustrated TX(Msg2, DATs, SERV1, SF, LNK1)), otherwise, in a non-limitative example said message Msg2 comprises a first flag R1 acknowledging that the internal clock's time T1 and the reference clock's time T2 are the same (illustrated TX(Msg2, R1, SERV1, SF, LNK1) in dotted lines).

It is to be noted that the transmission of said first flag R1 is a non-limitative embodiment. In another non-limitative embodiment, no flag is sent when there is no shift S.

### Second embodiment

As described hereinafter, according to said second non-limitative embodiment illustrated in Fig. 5 and in Fig. 6, the secure element SE (and not the remote server SERV1 anymore) will perform the comparison between the internal time T1 and the reference time T2 to check if there is a shift between both times.

According to said second embodiment, the secure element SE (illustrated in Fig. 5) is adapted to perform a synchronization function SF comprising:
- the transmission of a first message Msg1 to said remote server SERV1 via said communication link LNK1 (illustrated TX(Msg1, RQ2, SF, SERV1, LNK1));
- the reception of a second message Msg2 from said remote server SERV1 via said communication link LNK1 (illustrated RX(Msg2, DAT2, SERV1, SF, LNK1));
- the checking if said internal clock's time T1 is shifted with respect to said reference clock's time T2 according to said second message Msg2 (illustrated CHCK(DAT1, DAT2, Msg2)).

In this second embodiment, the first message Msg1 comprises a request RQ2 for the reference data DAT2 and the second message Msg2 comprises said reference data DAT2. In this case, the checking comprises the comparison of said first data DAT1 with said reference data DAT2 by said secure element SE (illustrated COMP(DAT1, DAT2, SF)).

Hence, according to the content of said second message Msg2 received by said synchronization function SF, either said checking is a verification that said content are synchronization data (first embodiment described before), or said checking is a comparison of the internal time T1 with the reference time T2 (second embodiment). According to said checking, transmission of synchronization data DATs, and therefore synchronization will be performed or not as described hereinafter. It is to be noted that according to the content of the first message Msg1 sent, the synchronization function SF is aware that it will receive either synchronization data DATs or a first flag R1 (first embodiment described before), or it will receive a reference time T2 (second embodiment).

The synchronization function SF further comprises:
- the request for the internal clock's time T1 from said component MC (which is the OTP generator OTPG in the given example) when said communication link LNK1 is established (illustrated RQ(DAT1, SF, PF), LNK2) and its reception (illustrated RX(DAT1, PF, SF, LNK2)) ;
- if said internal clock's time T1 is shifted with respect to said reference clock's time T2, the transmission of said synchronization data DATs to said component MC (illustrated TX(DATs, SF, PF, LNK2)).

The synchronization function SF used the communication link LNK2 for said request and said transmission.

In a non-limitative embodiment, if said internal clock's time T1 is equal to said reference clock's time T2, the synchronization function SF doesn't transmit the synchronization data DATs, but is further adapted to transmit a second flag R2 to said component MC, said second flag R2 indicating that there is no shift between said internal clock's time T1 and said reference clock's time T2 (illustrated TX(R2, SF, PF, LNK2) in dotted lines).

In a first non-limitative embodiment, the synchronization data DATs are the reference time T2 itself.

In a second none- limitative embodiment, the synchronization data DATs are the offset value Δt corresponding to the shift S between said times T1 and T2.

The component MC illustrated in Fig. 5 is adapted to perform the peripheral function PF comprising:
- the transmission of the internal clock's time T1 to said secure element SE upon request of said secure element SE (illustrated TX(DAT1, PF, SF, LNK2)) ;
- if said internal clock's time is shifted with respect to said reference clock's time T2, the reception of said synchronization data DATs from said secure element SE (illustrated RX(DATs, PF, SF, LNK2)) and the update of said internal clock's time T1 according to said synchronization data DAT (illustrated UPD(T1, DATs)).

The peripheral function PF used the communication link LNK2 for said transmission and said reception.

In order to perform the synchronization according to the second non-limitative embodiment, the remote server SERV1 illustrated in Fig. 6 is adapted to:
- establish the communication link LNK1 for said main function MF with said secure element SE (illustrated SET_LINK1(SERV1, SE)) ;
- transmit said reference clock's time T2 to said secure element SE via said communication link LNK1 (illustrated TX(DAT2, SERV1, SF,LNK1)) upon request of said secure element SE.

For both embodiments (Fig. 3-Fig.4 and Fig. 5-Fig. 6), as the secure element SE is aware of the set-up of a communication link LNK1 between the smart card D and the remote server SERV1, it is said secure element SE which will ask the component MC for the internal time T1.

As the secure element SE is linked with said remote server SERV1 via said communication link LNK1, it is the secure element SE which will send the internal clock's time T1 to said remote server SERV1 (in the first embodiment) or said request RQ2 for the reference data DAT2 (in the second embodiment), and receive the data DATs representative of said shift (in the first embodiment) or receive the reference time T2 (in the second embodiment) from the remote server SERV1 via said communication link LNK1.

In a non-limitative embodiment, said communication link LNK1 is a contact link or a contactless link. In a non-limitative example it is an NFC ("Near Field Communication) communication link.

As illustrated in Fig. 2, in a first non-limitative embodiment, the remote server SERV1 comprises said reference clock T2. It acts as a synchronization server.

As illustrated in Fig. 1, in a second non-limitative embodiment, a synchronization server SERV2 different from the remote server SERV1 comprises said reference clock T2. In this case, the remote server SERV1 is adapted to request the reference clock's time T2 to said synchronization server SERV2 (illustrated RQ(DAT2, SERV1, SERV2) in Fig. 4 and in Fig. 6 in dotted lines) and to receive said reference clock's time T2 from said synchronization server SERV2 (illustrated RX(DAT2, SERV2, SERV1) in Fig. 4 and in Fig. 6 in dotted lines).

It is to be noted that for both embodiments illustrated in Fig. 3-Fig. 4 and Fig. 5-Fig. 6, the synchronization is triggered only if the remote server SERV1 is adapted to support said synchronization, that is to say only if said remote server SERV1 is adapted to perform the functions above-described.

In order to check if this is the case, in a first non-limitative embodiment, the secure element SE is adapted to send a request (not illustrated) to said remote server SERV1 via said communication link LNK1 for checking if said remote server SERV1 supports said synchronization. It is to be noted that this checking may be performed within said synchronization function SF as the first step to perform.

In a second non-limitative embodiment, the remote server SEV1 is adapted to send a message (not illustrated) to said secure element SE via said communication link LNK1 for informing said secure element SE if it supports said synchronization.

This checking avoids the sending of requests (for the reference time T2 for example), which won't be understood by the remote server SERV1.

In the example given, the peripheral function PF is performed by a component MC which is different from the secure element SE. As explained before, said peripheral function PF may be performed by the secure element SE itself. In this case, the transmission of the different data such as the time T1 and the synchronization data DATs is performed between the peripheral function PF and the synchronization function SF within said secure element SE.

In the non-limitative example which has been above-described, the first data DAT1 are an internal clock's time T1 and the reference data are a reference clock's time T2.

In another non-limitative example, said first data DAT1 are a pseudorandom generator's value PSC1 and said reference data DAT2 are a reference pseudorandom generator's value PSC2.

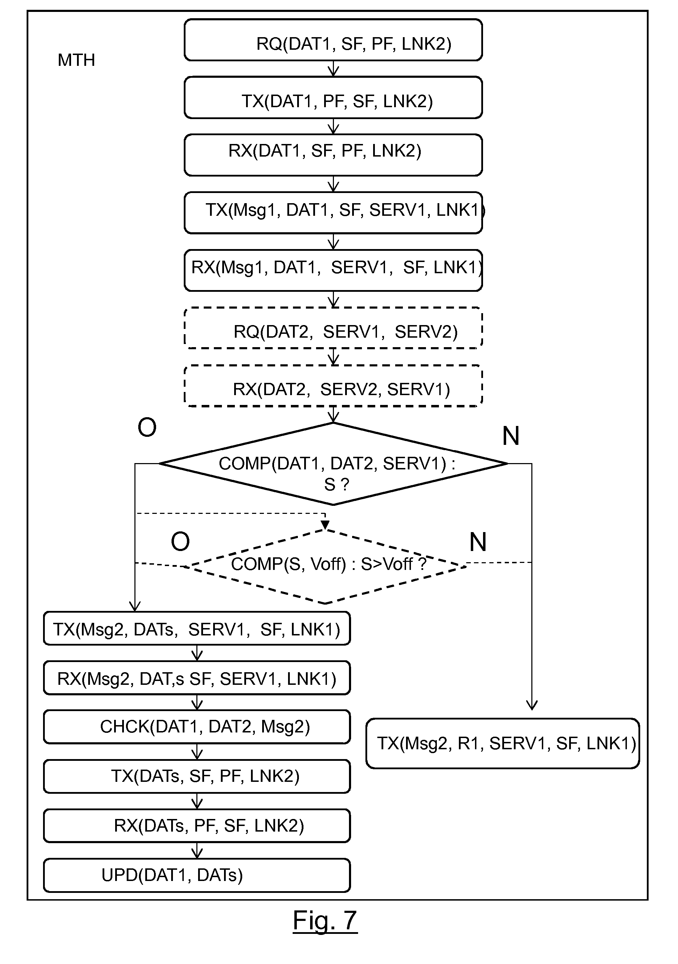

As may be understood from above, the synchronization system SYS carries out a synchronization method MTH, as illustrated in Fig. 7 to Fig. 10, for synchronizing a peripheral function PF of a portable device D, said peripheral function PF using first data DAT1, said portable device D comprising a component MC adapted to perform said peripheral function PF and a secure element SE adapted to perform a main function MF.

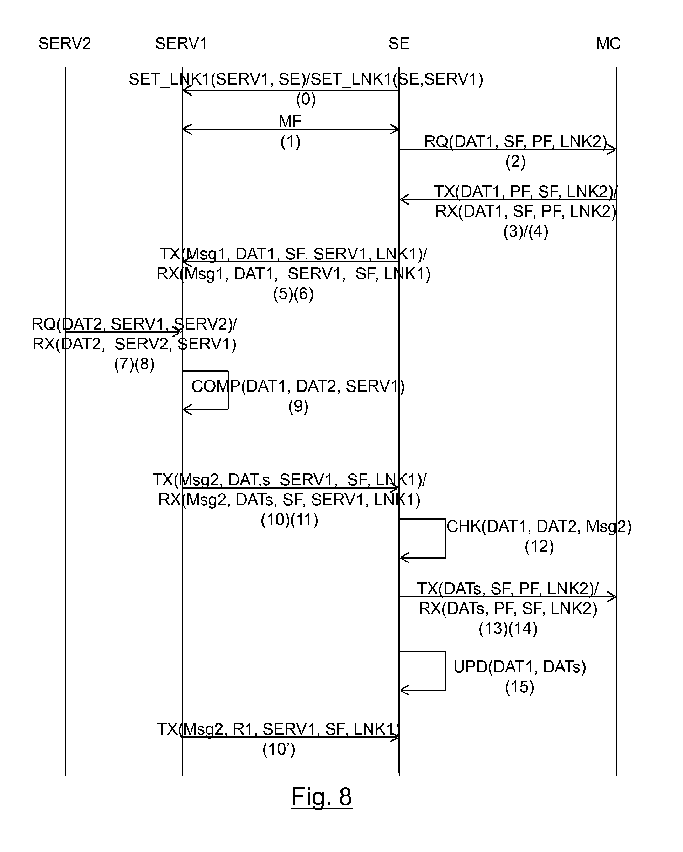

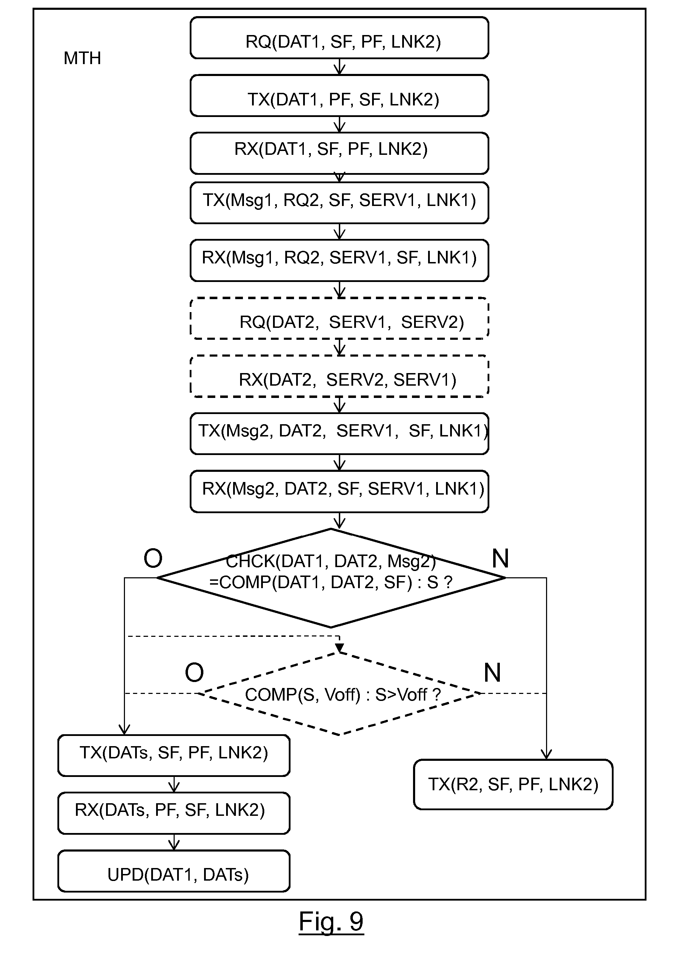

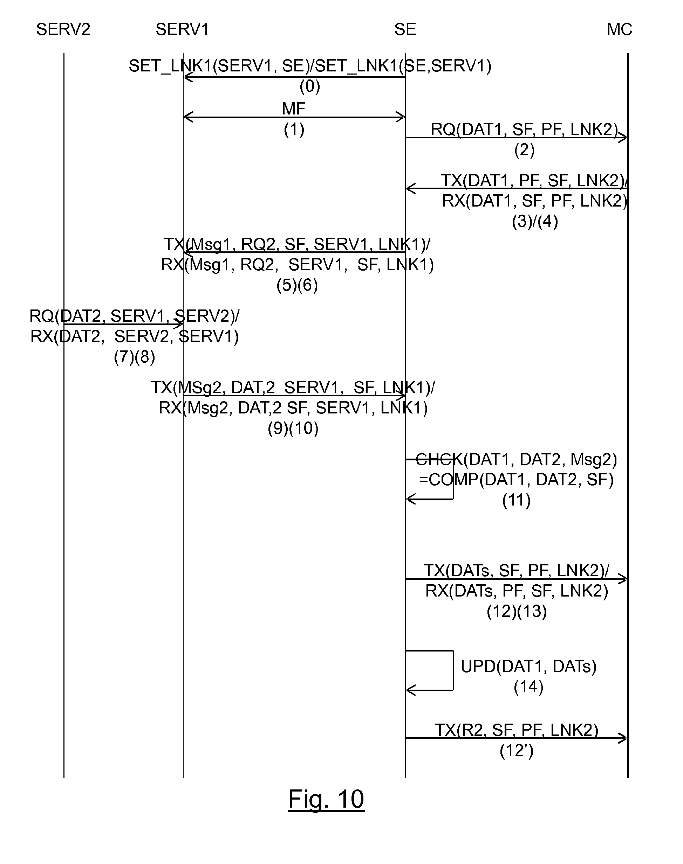

Said synchronization method MTH comprises a synchronization of the first data DAT1 with reference data DAT2 via a communication link LNK1 established for said main function MF between said portable device D and the remote server SERV1, said synchronization comprising:
- the transmission by said secure element SE of said first message Msg1 to said remote server SERV1 via said communication link LNK1 (illustrated TX(Msg1, DAT1, SF, SERV1, LNK1) in Fig. 7 and Fig. 8, and TX(Msg1, RQ2, SF, SERV1, LNK1) in Fig. 9 and Fig. 10);
- the reception by said secure element SE of said second message Msg2 from said remote server SERV1 via said communication link LNK1 (illustrated RX(Msg2, DATs, SF, SERV1, LNK1) in Fig. 7 and Fig. 8, and TX(Msg1, DAT2, SF, SERV1, LNK1) in Fig. 9 and Fig. 10);
- the checking by said secure element SE if said first data DAT1 are shifted with respect to said reference data DAT2 according to said second message Msg2 (illustrated CHCK(DAT1, DAT2, Msg2)).

Said synchronization further comprises:
- the reception by said remote server SERV1 of said first message Msg1 sent by said secure element SE (illustrated RX(Msg1, DAT1, SERV1, SF, LNK1)) in Fig. 7 and Fig. 8, and RX(Msg1, RQ2, SERV1, SF, LNK1) in Fig. 9 and Fig. 10);
- the transmission by said remote server SERV1 of said second message Msg2 to said secure element SE via said communication link LNK1 (illustrated TX(Msg2, DATs, SERV1, SF, LNK1) in Fig. 7 and Fig. 8, and TX(Msg1, DAT2, SERV1, SF, LNK1) in Fig. 9 and Fig. 10).

The same example as above will be used to describe the synchronization method MTH, where said first data DAT1 are an internal clock's time T1 and said reference data DAT2 are a reference clock's time T2.

### First embodiment

According to a first non-limitative embodiment illustrated in Fig. 7 and in Fig. 8, the first message Msg1 comprises said first data DAT1 and the second message Msg2 comprises synchronization data DATs if said first data DAT1 are shifted with respect to said reference data DAT2.

Hence, according to said first non-limitative embodiment, said synchronization method MTH further comprises (as illustrated in Fig. 7):
- the request by said secure element SE for the internal clock's time T1 to said component PF when said communication link LNK is established (illustrated RQ(DAT1, SF, PF, LNK2)) ;
- the transmission by said component MC of said internal clock's time T1 to said secure element SE (illustrated TX(DAT1, PF, SF, LNK2)) ;
- the reception by said secure element SE of said internal clock's time T1 sent by said component MC (illustrated RX(DAT1, SF, PF, LNK2)) ;
- the comparison by said remote server SERV1 of said internal clock's time T1 with the reference clock's time T2 (illustrated COMP(DAT1, DAT2, SERV1))) ;
- if said internal clock's time T1 is shifted with respect to said reference clock's time T2, (branch O illustrated) :
   - the transmission by said secure element SE of said synchronization data DATs to said component MC (illustrated TX(DATs, SF, PF, LNK2)) ;
   - the reception by said component MC of said synchronization data DATs sent by said secure element SE (illustrated RX(DATs, PF, SF, LNK2)) and the update by said component MC of said internal clock's time T1 according to said synchronization data DATs (illustrated in dotted lines UPD(DAT1, DATs) ;
- if not, (branch N illustrated), the transmission by said remote server SERV1 of said second message Msg2 comprising said first flag R1 to said secure element SE via said communication link LNK1, said first flag R1 indicating that there is no shift between said internal clock's time T1 and said reference clock's time T2 (illustrated TX(Msg2, R1, SERV1, SF, LNK1)).

In a non-limitative embodiment, the time synchronization method MTH further comprises the comparison of the shift S between the time T1 and the time T2 with the predetermined offset value Voff mentioned above (illustrated in Fig. 7 COMP(S, Voff) in dotted lines).

In the non-limitative embodiment illustrated in Fig. 7, the remote server SERV1 requests the reference clock's time T2 to a synchronization server SERV2 (illustrated RQ(DAT2, SERV1, SERV2)) and receives the reference clock's time T2 from a synchronization server SERV2 (illustrated RX(DAT2, SERV2, SERV1)).

Fig. 8 illustrates the sequence of the different steps of the time synchronization method MTH for said first non-limitative embodiment.

In the non-limitative example illustrated, the main function MF is performed before the synchronization.

As can be seen, the communication link LNK1 between the secure element SE and the remote server SERV1 is set-up (step 0) for the main function MF, the secure element SE being connected to a terminal T. The main function MF is then performed (step1). The data corresponding to the main function MF are sent via a first data flow via the communication link LNK1 to the remote server SERV1 which finalizes the main function MF. It is to be noted that the secure element SE performs a part of the main function and the remote server SERV1 performs another part of the main function MF. The secure element SE asks the component MC for the time T1 (step2) which answers back with said internal time T1 (step 3). After receiving said internal time T1 (step 4), the secure element SE transmits it via the first message Msg1 to the remote server SERV1 which carries out the main function MF (step 5). The transmission is performed via a second data flow following the first data flow. When said remote server SERV1 received said internal time T1 (step 6), it asks the synchronization server SERV2 for the reference time T2 (step 7) and receives it (step 8). The remote server SERV1 now compares the internal time T1 with the reference time T2 (step 9).

If there is shift S, the remote server SERV1 transmits synchronization data DATs via the second message Msg2 to the secure element SE (step 10) which after reception (step 11) and after checking the content of said second messages Msg2 (step 12), transmits said synchronization data DATs to the component MC (step 13). Upon reception (step 14), the component MC updates the internal time T1 (step 15).

On the contrary, if there is no shift S, the remote server SERV1 transmits the first flag R1 via the second message Msg2 to the secure element SE to inform that the two times T1, T2 are the same (or that the shift S is acceptable as below the offset value Voff) (step 10'). There is no update of the internal time T1.

### Second embodiment

According to a second non-limitative embodiment illustrated in Fig. 9 and in Fig. 10, the first message Msg1 comprises a request RQ2 for the reference data DAT2 and the second message Msg2 comprises said reference data DAT2.

Hence, according to said second non-limitative embodiment, said synchronization method MTH further comprises (as illustrated in Fig. 9):
- the request by said secure element SE for the internal clock's time T1 to said component MC when said communication link LNK is established (illustrated RQ(DAT1, SF, PF, LNK2)) ;
- the transmission by said component MC of said internal clock's time T1 to said secure element SE (illustrated TX(DAT1, PF, SF, LNK2)) ;
- the reception by said secure element SE of said internal clock's time T1 sent by said component MC (illustrated RX(DAT1, SF, PF, LNK2)) ;
- the checking if said internal clock's time T1 is shifted with respect to said reference clock's time T2, said checking comprising the comparison by said secure element SE of said internal clock's time T1 with the reference clock's time T2 (illustrated COMP(DAT1, DAT2, SF)) ;
- if said internal clock's time T1 is shifted with respect to said reference clock's time T2, (branch O illustrated) :
   - the transmission by said secure element SE of synchronization data DATs to said component MC (illustrated TX(DATs, SF, PF, LNK2)) ;
   - the reception by said component MC of said synchronization data DAT sent by said secure element SE (illustrated RX(DATs, PF, SF, LNK2)) ;
   - the update by said component MC of said internal clock's time T1 according to said synchronization data DAT (illustrated in dotted lines UPD(DAT1, DATs) ;
- if not, (branch N illustrated), the transmission by said secure element SE of a second flag R2 to said component MC, said second flag R2 indicating that there is no shift S between said internal clock's time T1 and said reference clock's time T2 (illustrated TX(R2, SF, PF, LNK2)).

Fig. 10 illustrates the sequence of the different steps of the time synchronization method MTH for said second non-limitative embodiment.

In the non-limitative example illustrated, the main function MF is performed before the synchronization.

As can be seen, the communication link LNK1 between the secure element SE and the remote server SERV1 is set-up (step 0) for the main function MF, the secure element SE being connected to a terminal T. The main function MF is then performed (step1). The data corresponding to the main function MF are sent via a first data flow via the communication link LNK1 to the remote server SERV1 which finalizes the main function MF. It is to be noted that the secure element SE performs a part of the main function and the remote server SERV1 performs another part of the main function MF. The secure element SE asks the component MC for the time T1 (step2) which answers back with said internal time T1 (step 3). After receiving said internal time T1 (step 4), the secure element SE transmits the request RQ2 for the reference time T2 via the first message Msg1 to the remote server SERV1 which carries out the main function MF (step 5). The transmission is performed via a second data flow following the first data flow. When said remote server SERV1 received said request RQ2 (step 6), it asks the synchronization server SERV2 for the reference time T2 (step 7) and receives it (step 8). The remote server SERV1 transmits said reference time T2 via said second message Msg2 to said secure element SE (step 9) which receives it (step 10).

Said secure element SE now compares the internal time T1 with the reference time T2 (step 11).

If there is shift S, the secure element SE transmits synchronization data DATs to the component MC (step 12). Upon reception (step 13), the component MC updates the internal time T1 (step 14).

On the contrary, if there is no shift S, the secure element SE transmits the second flag R2 to the component MC to inform that the two times T1, T2 are the same (or that the shift S is acceptable as below the offset value Voff) (step 12'). There is no update of the internal time T1.

It is to be understood that the present invention is not limited to the aforementioned embodiments and variations and modifications may be made without departing from the scope of the invention. In the respect, the following remarks are made.

Hence, instead of a smart card, a portable device D may be a USB key.

Hence, in a non-limitative embodiment, the synchronization is performed by the portable device D when a time interval dt has been reached. It means that during this time interval dt from the last update, the cumulative shift will be considered acceptable. Hence, this embodiment is performed without any comparison of both times T1 and T2. One only needs to know the reference time T2 and to transfer the synchronization data DATs to the component MC for the peripheral function PF to perform the update of time T1. It avoids the communication link LNK1 established for the main function MF to be always overloaded with data corresponding to the synchronization and it avoids increasing the running time of the main function MF.

It is to be noted that the last update of the time T1 is well-known by the peripheral function PF.

Hence, instead of payment transaction with an online connection, the main function MF may be a cash withdrawal on an ATM, or any other operation which needs a connection to a remote server.

It is to be understood that the present invention is not limited to the aforementioned application.

Hence, instead of a payment application, the invention may apply to any other secure application which needs an OTP to be authenticated, for example a biometric application, or any other kind of secure application which need an authentication, such as an authentication with a firm id card to enter in the building of a firm.

Hence, instead of an OTP generator, the peripheral function PF may be a dynamic CVV ("Card Verification Value").

Hence, instead of a banking card, the portable device may be an eID card such as a passport card, a healthcare card, a driving license card.

Therefore the invention presents the further following advantages.
- it gives a simple way to retrieve synchronization information ;
- it permits the use of costless internal clocks which are less precise than more expensive clocks when the peripheral function uses an internal clock;
- it tolerates the use of internal clocks which supports a shift ;
- it overcomes the problems of the temperature and the mechanical constraints ;
- it avoids using a clock which is expensive due to the few space allowed in some portable device, such as smart cards, as the more precise and the smaller a clock is, the more expensive it is ;
- It doesn't affect the main function, while using its communication link. Therefore, it may be applied on existing communication infrastructure as it doesn't modify the communication flow of the main function between the remote server and the secure element, while using the communication link set-up for said main function.

Any reference sign in the following claims should not be construed as limiting the claim. It will be obvious that the verb "to comprise" and its conjugations do not exclude the presence of any other steps or elements beside those defined in any claim. The word "a" or "an" preceding an element or step does not exclude the presence of a plurality of such elements or steps.

## Claims

1. Synchronization method (MTH) for synchronizing a peripheral function (PF) of a portable device (D), said peripheral function (PF) using first data (DAT1), said portable device (D) comprising a component (MC) adapted to perform said peripheral function (PF) and a secure element (SE) adapted to perform a main function (MF), **wherein** said synchronization method (MTH) comprises a synchronization of said first data (DAT1) with reference data (DAT2) via a communication link (LNK1) established for said main function (MF) between said portable device (D) and a remote server (SERV1), said synchronization comprising:
- the transmission by said secure element (SE) of a first message (Msg1) to said remote server (SERV1) via said communication link (LNK1) ;
- the reception by said secure element (SE) of a second message (Msg2) from said remote server (SERV1) via said communication link (LNK1) ;
- the checking by said secure element (SE) if said first data (DAT1) are shifted with respect to said reference data (DAT2) according to said second message (Msg2).

2. Synchronization method (MTH) according to claim 1, **wherein** the first message (Msg1) comprises said first data (DAT1) and the second message (Msg2) comprises synchronization data (DATs) if said first data (DAT1) are shifted with respect to said reference data (DAT2), and **wherein** the synchronization further comprises the comparison of said first data (DAT1) with said reference data (DAT2) by said remote server (SERV1).

3. Synchronization method (MTH) according to claim 1, **wherein** the first message (Msg1) comprises a request (RQ2) for the reference data (DAT2) and the second message (Msg2) comprises said reference data (DAT2), and **wherein** the checking comprises the comparison of said first data (DAT1) with said reference data (DAT2) by said secure element (SE).

4. Synchronization method (MTH) according to any one of the previous claims 1 to 3, **wherein** the synchronization further comprises :
- the request by said secure element (SE) for the first data (DAT1) from said component (MC) when said communication link (LNK1) is established and the reception of said first data (DAT1) ;
- if said first data (DAT1) are shifted with respect to said reference data (DAT2), the transmission by said secure element (SE) of synchronization data (DATs) to said component (MC).

5. Synchronization method (MTH) according to any one of the previous claims 1 to 4, **wherein** the synchronization further comprises :
- the transmission by said component (MC) of the first data (DAT1) to said secure element (SE) upon request of said secure element (SE) ;
- if said first data (DAT1) are shifted with respect to said reference data (DAT2), the reception by said component (MC) of synchronization data (DATs) from said secure element (SE) and the update of said first data (DAT1) according to said synchronization data (DATs).

6. Synchronization method (MTH) according to any one of the previous claims 1 to 5, **wherein** the transmission/reception of said synchronization data (DATs) is performed if said first data (DAT1) are shifted by a predetermined offset value (Voff) with respect to said reference data (DAT2).

7. Synchronization method (MTH) according to any one of the previous claims 1 to 6, **wherein** said first data (DAT1) are an internal clock's time (T1) and said reference data (DAT2) are a reference clock's time (T2).

8. Synchronization method (MTH) according to any one of the previous claims 1 to 6, **wherein** said first data (DAT1) are a pseudorandom generator's value (PSC1) and said reference data (DAT2) are a reference pseudorandom generator's value (PSC2).

9. Synchronization system (SYS) comprising:
- a remote server (SERV1) ; and
- a portable device (D) comprising a component (MC) adapted to perform a peripheral function (PF) which uses first data (DAT1) and a secure element (SE) adapted to perform a main function (MF), **wherein** said portable device (D) is adapted to perform a synchronization of said first data (DAT1) with reference data (DAT2) via a communication link (LNK1) established between said portable device (D) and said remote server (SERV1) for said main function (MF), said secure element (SE) being adapted to perform a synchronization function (SF) comprising :
- the transmission of a first message (Msg1) to said remote server (SERV1) via said communication link (LNK1) ;
- the reception of a second message (Msg2) from said remote server (SERV1) via said communication link (LNK1) ;
- the checking if said first data (DAT1) are shifted with respect to said reference data (DAT2) according to said second message (Msg2).

10. Synchronization system (SYS) according to claim 9, **wherein** said portable device (D) is a smart card (SM).

11. Synchronization system (SYS) according to claim 9 or claim 10, **wherein** said component (MC) is the secure element (SE).

12. Synchronization system (SYS) according to any one of the previous claims 9 to 11, **wherein** said synchronization function (SF) further comprises :
- the request for the first data (DAT1) from said component (MC) when said communication link (LNK1) is established and the reception of said first data (DAT1) ;
- if said first data (DAT1) are shifted with respect to said reference data (DAT2), the transmission of synchronization data (DAT) to said component (MC).

13. Synchronization system (SYS) according to any one of the previous claims 9 to 12, **wherein** said component (MC) of said portable device (D) is adapted to perform said peripheral function (PF) comprising :
- the transmission of the first data (DAT1) to said secure element (SE) upon request of said secure element (SE) ;
- if said first data (DAT1) are shifted with respect to said reference data (DAT2), the reception of synchronization data (DAT) from said secure element (SE) and the update of said first data (DAT1) according to said synchronization data (DAT).

14. Synchronization system (SYS) according to any one of the previous claims 9 to 13, **wherein** said remote server (SERV1) is adapted to :
- receive said first message (Msg1) from said secure element (SE) via said communication link (LNK1) ;
- transmit said second message (Msg2) to said secure element (SE) via said communication link (LNK1).

15. Portable device (D) comprising a component (MC) adapted to perform a peripheral function (PF) which uses first data (DAT1) and a secure element (SE) adapted to perform a main function (MF), **wherein** said portable device (D) is adapted to perform a synchronization of said first data (DAT1) with reference data (DAT2) via a communication link (LNK1) established for said main function (MF) between said portable device (D) and said remote server (SERV1), said secure element (SE) being adapted to perform a synchronization function (SF) comprising :
- the transmission of a first message (Msg1) to said remote server (SERV1) via said communication link (LNK1) ;
- the reception of a second message (Msg2) from said remote server (SERV1) via said communication link (LNK1) ;
- the checking if said first data (DAT1) are shifted with respect to said reference data (DAT2) according to said second message (Msg2).
